# EUROPEAN PATENT SPECIFICATION

(11) **EP 0 515 626 B1**
(45) Date of publication and mention of the grant of the patent: **27.12.1995**
(21) Application number: 92901039.5
(22) Date of filing: 17.12.1991
(51) Int. Cl.: A01N 35/02

(54) **STERILISING COMPOSITION**
STERILISIERENDE ZUSAMMENSETZUNG
COMPOSITION STERILISANTE

(30) Priority: 20.12.1990 IT 2245690
(43) Date of publication of application: 02.12.1992
(73) Proprietor: Citrosil Sanitas S.p.A., I-50127 Firenze FI (IT)
(72) Inventor: SAETTONE, Marco Fabrizio, I-55049 Viareggio (IT); GIANNACCINI, Boris, I-55049 Viareggio (IT); BURGALASSI, Susi, I-56018 Tirrenia (IT)
(74) Representative: Bardini, Marco Luigi
(86) International application number: EP9102424
(87) International publication number: WO9210935

(56) References cited:
- EP-A- 0 264 658
- DE-A- 3 503 848
- GB-A- 1 602 653
- US-A- 3 912 450

## Description

This invention relates to an improved sporicidal composition. In particular it relates to an aqueous formulation containing glutaraldehyde and a water soluble salt of N-lauroyl sarcosine for use as a disinfectant and or sterilizing agent.

In a number of medical and industrial situations there is a need to be able to achieve surface sterilization at relatively low temperatures and this is conveniently accomplished using a liquid sterilizing composition. Where it is desired that the sterilizing composition is sporicidal as well as bactericidal then aqueous formulations containing glutaraldehyde have been widely used.

Simple aqueous solutions of glutaraldehyde are reported to increase their sporicidal activity when the pH of the solution is adjusted to being greater than 7. However at these higher pH values glutaraldehyde undergoes polymerisation with concomitant progressive loss in sporicidal activity. Thus such formulations have a very limited effective life and also they cannot be supplied by the manufacture in a form ready for use.

USP 3,912,450 teaches sporicidal compositions comprising an aqueous solution of glutaraldehyde and a nonionic or anionic surfactant, such as ethoxylates of isomeric linear alcohols or alkyl aryl sulphonates. These compositions are said to be sporicidal within the pH range of 1 to 9 but are preferably used in conjunction with sonic or ultrasonic irradiation.

We have now found that an aqueous formulation comprising glutaraldehyde, and a water soluble salt of N-lauroyl sarcosine, possesses particularly advantageous properties as a sporicidal composition.

Thus the present invention provides a sporicidal composition which comprises an aqueous solution of glutaraldehyde, a water soluble salt of N-lauroyl sarcosine and buffer salts to maintain the pH within the range 5 to 6. The amount of glutaraldehyde present in the formulation is conveniently within the range of 1 to 2.5% w/w, more preferably 1.2 to 2% and more especially 2% w/w. The amount of the water soluble salt of N-lauroyl sarcosine in the formulation is conveniently within the range of 0.1 to 2.0% w/w and more preferably within the range 0.1 to 0.2% and more especially 0.15%.

Suitable water soluble salts of N-lauroyl sarcosine, include alkali and alkaline metal salts, for example the sodium, potassium or magnesium salt. A particularly preferred water soluble salt of N-lauroyl sarcosine is the sodium salt hereinafter referred to as sodium N-lauroyl sarcosinate.

The required pH of the solution may be obtained using conventional buffer salts known to be suitable for maintaining the pH at the required value within the range 5 to 6. Examples of suitable buffer salts include water soluble salts of phthalic acid, benzoic acid, boric acid, citric acid, ethylenediamine tetra-acetic acid, gluconic acid, glutamic acid, glutaric acid, lactic acid, malic acid, oxalic acid, phosphoric acid, succinic acid and tartaric acid. Suitable water soluble salts of these acids include alkali metal salts such as the sodium and/or potassium salts, or salts with organic bases such as ethanolamine.

Most preferably the pH of the sporicidal composition is around 5.5 e.g. 5.4 to 5.7.

The sporicidal composition according to the invention may also contain a suitable fragrance. Examples of suitable fragrances include those of citrus fruits and in particular essence of lemon.

A particularly preferred sporicidal composition according to the invention comprises an aqueous solution containing 1.2 to 2% w/w glutaraldehyde, 0.1 to 0.2% w/w sodium N-lauroyl sarcosinate with buffer salts to give a pH around 5.5 and optionally containing a suitable fragrance such as essence of lemon. More especially the buffer salts are those derived from phthalic acid and in particular phthalic acid monopotassium salt and sodium hydroxide.

An example of a typical sporicidal composition according to the invention is as follows.

| FORMULATION (100g SOLUTION) | |
|---|---|
| Glutaraldehyde (100%) | 2g |
| Sodium N-lauroyl sarcosinate | 0.15g |
| Essence of lemon | 0.25g |
| Phthalic acid, monopotassium salt | 0.1021g |
| 1M Sodium hydroxide solution | 0.36*ml |
| Water | q.s. 100g |

| | |
|---|---|
| (*q.s. pH 5.5) | |

The sterilizing composition according to the invention may be prepared in a conventional manner and conveniently in a single vessel. Thus the composition according to the Example may be prepared as follows:-
Phthalic acid monopotassium salt is added to a solution of the glutaraldehyde in water, followed by addition of the sodium hydroxide solution. The sodium N-lauroyl sarcosinate and fragrance are then added. The final formulation is then made up to 100g by the addition of water.

The sporicidal composition according to the invention exhibits a particularly desirable profile of action in that it has a very effective and relatively fast sporicidal action, is essentially non-corrosive over the time span required to achieve its sporicidal effect and has a relatively long shelf life.

Thus, for example, in conventional sporicidal tests such as the quantitative suspension test at room temperature or the sterilization of artifically contaminated metal cylinders at 37°C using Bacillus subtilis NCIB, Staphylococcus aureus ATCC 6538 Escherichia coli ATCC 10536 and Pseudomonas aeruginosa CIPA22 at a total spore concentration of 2.5 x 10⁷ spore/ml, the composition according to the Example achieved a total kill in 5 hrs. This was a significantly faster kill time than the obtained with a commercially available glutaraldehyde preparation solid under the name DIBA, and which is essentially an aqueous solution containing 2% glutaraldehyde and 0.25% of an ethoxylated alcohol, (a non ionic surfactant).

The sporicidal compositions according to the invention are conveniently used at room temperature but may also be conveniently used at a temperature within the range 10-50°C.

## Claims

1. A sporicidal composition which comprises an aqueous solution of glutaraldehyde, a water soluble salt of N-lauroyl sarcosine and buffer salts to maintain the formulation at a pH within the range 5 to 6.

2. A sporicidal composition as claimed in Claim 1 wherein the amount of glutaraldehyde is within the range of 1 to 2.5% of weight per weight (w/w).

3. A sporicidal composition as claimed in Claims 1 or 2 wherein the amount of glutaraldehyde present is 1.2 to 2% w/w.

4. A sporicidal composition as claimed in any of Claim 1 to 3 wherein the concentration of the water soluble salt of N-lauroyl sarcosine is within the range of 0.1 to 2.0% w/w.

5. A sporicidal composition as claimed in any of Claims 1 to 4 wherein the concentration of the water soluble salt of N-lauroyl sarcosine is within the range 0.1 to 0.2% w/w.

6. A sporicidal composition as claimed in any of Claims 1 to 5 wherein the water soluble salt of N-lauroyl sarcosine is an alkali or alkaline metal salt.

7. A sporicidal composition as claimed in any of Claims 1 to 6 wherein the water soluble salt of N-lauroyl sarcosine is a sodium, potassium or magnesium salt.

8. A sporicidal composition as claimed in any of Claims 1 to 7 wherein the water soluble salt of N-lauroyl sarcosine is sodium N-lauroyl sarcosinate.

9. A sporicidal composition as claimed in any of claims 1 to 8 wherein the pH of the solution is around 5.5.

10. A sporicidal composition as claimed in any of claims 1 to 9 wherein the buffer salts are selected from water soluble salts of phthalic acid benzoic acid, boric acid, citric acid, ethylenediamine tetra-acetic acid, gluconic acid, glutamic acid, glutaric acid, lactic acid, malic acid, oxalic acid, phosphoric acid, succinic acid or tartaric acid.

11. A sporicidal composition as claimed in Claims 1-10 wherein the buffer salts are prepared in situ from phthalic acid mono potassium salt and sodium hydroxide.

12. A sporicidal composition as claimed in any of claims 1 to 11 which also contains a fragrance.

13. A sporicidal composition as claimed in Claim 12 wherein the fragrance is essence of lemon.

## Patentansprüche

1. Eine sporenvertilgende Zusammensetzung, die eine wässerige Lösung von Glutaraldehyd, ein wasserlösliches Salz von N-lauroyl Sarcosine und Puffersälze enthält, so daß das Ph-Niveau in der Formel zwischen den Grenzwerten 5 und 6 behalten werden kann.

2. Eine sporenvertilgende Zusammensetzung nach Anspruch 1, worin der Gehalt von Glutaraldehyd 1 bis 2.5% (Gew./Gew.) beträgt.

3. Eine sporenvertilgende Zusammensetzung nach Anspruch 1 oder 2, worin der Gehalt von Glutaraldehyd 1.2 bis 2% (Gew./Gew.) beträgt.

4. Eine sporenvertilgende Zusammensetzung nach einem der Ansprüche 1 bis 3, worin sich die Konzentration vom wasserlösilichen Salz von N-lauroyl Sarcosine zwischen den Grenzwerten 0.1 und 2.0% (Gew./Gew.) befindet.

5. Eine sporenvertilgende Zusammensetzung nach einem der Ansprüche 1 bis 4, worin sich die Konzentration vom wasserlösilichen Salz von N-lauroyl Sarcosine zwischen den Grenzwerten 0.1 und 0.2% (Gew./Gew.) befindet.

6. Eine sporenvertilgende Zusammensetzung nach einem der Ansprüche 1 bis 5, worin das wasserlösiliche Salz von N-lauroyl Sarcosine ein Alkali oder ein Alkalimetallsalz ist.

7. Eine sporenvertilgende Zusammensetzung nach einem der Ansprüche 1 bis 6, worin das wasserlösiliche Salz von N-lauroyl Sarcosine ein Natrium-, Kalium- oder Magnesiumsalz ist.

8. Eine sporenvertilgende Zusammensetzung nach einem der Ansprüche 1 bis 7, worin das wasserlösiliche Salz von N-lauroyl Sarcosine ein Natrium N-lauroyl Sarcosinate ist.

9. Eine sporenvertilgende Zusammensetzung nach einem der Ansprüche 1 bis 8, worin das Ph-Niveau der Lösung sich auf ungefähr 5.5 beläuft.

10. Eine sporenvertilgende Zusammensetzung nach einem der Ansprüche 1 bis 9, worin die Puffersälze unter wasserlöslichen Sälzen Phtalicsäure, Benzoylsäure, Borsäure, Zitronensäure, EDTA, Glukonirsäuresche, Glutaminsäure, Glutarinsäure, Milchsäure, Apfelsäure, Oxalsäure, Phosphorsäure, Bernsteinsäure oder Weinsäure) ausgewählt sind.

11. Eine sporenvertilgende Zusammensetzung nach einem der Ansprüche 1 bis 10), worin die Puffersälze auf der Stelle mit Phtalicsäure, Monokaliumsalz und Natriumhydroxyd vorbereitet werden.

12. Eine sporenvertilgende Zusammensetzung nach einem der Ansprüche 1 bis 11, die auch eine Essenz enthält.

13. Eine sporenvertilgende Zusammensetzung nach Anspruch 12, worin die Essenz Zitronenessenz ist.

## Revendications

1. Composition sporicide qui comprend une solution aqueuse de glutaraldéhyde, un sel soluble dans l'eau de N-lauroylsarcosine et des sels tampons pour maintenir la formulation à un pH compris dans la gamme de 5 à 6.

2. Composition sporicide selon la revendication 1, dans laquelle la quantité de glutaraldéhyde est comprise dans la gamme de 1 à 2,5 % en masse (m/m).

3. Composition sporicide selon la revendication 1 ou 2, dans laquelle la quantité de glutaraldéhyde présent est comprise entre 1,2 et 2 % m/m.

4. Composition sporicide selon l'une quelconque des revendications 1 à 3, dans laquelle la concentration du sel soluble dans l'eau de N-lauroylsarcosine est comprise dans la gamme de 0,1 à 2,0 % m/m.

5. Composition sporicide selon l'une quelconque des revendications 1 à 4, dans laquelle la concentration du sel soluble dans l'eau de N-lauroylsarcosine est comprise dans la gamme de 0,1 à 0,2 % m/m.

6. Composition sporicide selon l'une quelconque des revendications 1 à 5, dans laquelle le sel soluble dans l'eau de N-lauroylsarcosine est un sel alcalin ou de métal alcalin.

7. Composition sporicide selon l'une quelconque des revendications 1 à 6, dans laquelle le sel soluble dans l'eau de N-lauroylsarcosine est un sel de sodium, de potassium ou de magnésium.

8. Composition sporicide selon l'une quelconque des revendications 1 à 7, dans laquelle le sel soluble dans l'eau de N-lauroylsarcosine est le N-lauroylsarcosinate de sodium.

9. Composition sporicide selon l'une quelconque des revendications 1 à 8, dans laquelle le pH de la solution est égal à environ 5,5.

10. Composition sporicide selon l'une quelconque des revendications 1 à 9, dans laquelle on choisit les sels tampons parmi des sels solubles dans l'eau d'acide phtalique, d'acide benzoïque, d'acide borique, d'acide citrique, d'acide éthylènediaminetétracétique, d'acide gluconique, d'acide glutamique, d'acide glutarique, d'acide lactique, d'acide malique, d'acide oxalique, d'acide phosphorique, d'acide succinique ou d'acide tartrique.

11. Composition sporicide selon les revendications 1 à 10, dans laquelle on prépare in situ les sels tampons à partir de sel monopotassique d'acide phtalique et d'hydroxyde de sodium.

12. Composition sporicide selon l'une quelconque des revendications 1 à 11, laquelle contient également un parfum.

13. Composition sporicide selon la revendication 12, dans laquelle le parfum est l'essence de citron.
